# EUROPÄISCHE PATENTANMELDUNG

(11) **EP 1 058 370 A2**
(43) Veröffentlichungstag der Anmeldung: **06.12.2000**
(21) Anmeldenummer: 00111720.9
(22) Anmeldetag: 02.06.2000
(51) Int. Cl.: H02K 21/12

(54) **Bürstenloser Aussenläufer-Motor und bürstenloser Aussenläufer-Generator**

(30) Priorität: 05.06.1999 DE 19925765
(71) Anmelder: Remus, Hans-Jürgen, Dr., 2024 St-Aubin / Ne (CH)
(72) Erfinder: Remus, Hans-Jürgen, Dr., 2024 St-Aubin / Ne (CH)
(74) Vertreter: Blutke, Klaus Wilhelm, Dipl.-Ing.

(57) **Zusammenfassung**

Bürstenloser Gleichstrom-Außenhäufer-Generator und bürstenloser Außenläufer-Motor, bei dem der Rotor aus einer Permanentmagnetanordnung und einem zylindermantelförmigen Joch aus weich- oder hartmagnetischem Material besteht, zwischen denen ein Ringspalt gebildet ist, in den eine eisenlose freitragende Spule eintaucht.
Zur Wärmeableitung weist das Joch Schlitze auf oder über eine Generator-Hohlwelle und Lüftungsbohrungen in der Permanentanordnung wird Luft in/aus den/m Ringspalt geleitet.

Während des Betriebs o.g. Generators bzw. Motors mit einem mehrpoligen Rotor und einer Spuleneinheit mit einer der Polanzahl entsprechenden Anzahl von Wicklungen werden Spulenwicklungen oder Teile davon in beliebiger Kombination hintereinander oder parallel geschaltet.Dadurch ergibt sich eine Erhöhung der Generatorspannung bzw. eine optimale Motor-Lastanpassung und eine Erhöhung des elektrischen Wirkungsgrades.

## Beschreibung

Die Erfindung bezieht sich auf einen bürstenlosen Außenläufer-Motor und einen bürstenlosen Außenläufer-Gleichstrom-Generator.
In der Deutschen Patentschrift DE 42 05 985 C2 ist ein bürstenloser Außenläufermotor beschrieben, bei dem gemäß FIG.9 ein zylindrischer Permanentmagnet 1 in ein koaxial zu ihm liegendes hohlzylinderähnlich ausgebildetes Joch 2 eintaucht.
In den zwischen Permanentmagnet 1 und Joch 2 gebildeten Ringspalt 5 taucht eine freitragende Spule 3 ein, deren gedachte Achse mit der des Permanentmagneten und des Joches übereinstimmt.Der Permanentmagnet 1 sitzt drehtest unmittelbar auf einer Motorwelle 4, die über jeweils ein (Kugel-)Lager in einem Motordeckel drehbar gelagert ist. Der Permanentmagnet ist mit dem Joch über einen Rotorträger 6 drehfest verbunden. Das mit dem Permanentmagneten umlaufende Joch verhindert die Ausbildung von Wirbelströmen. In dieser Patentschrift wird auf eine elektronische Kommutierung verwiesen, wodurch ein Hinweis auf einen Gleichstrommotor gegeben ist.
Dieser Motor weist hinsichtlich seiner Belastbarkeit Nachteile auf, die durch Ohmsche Spulenverluste ( Wärmeentwicklung) bedingt sind.
Es ist deshalb Aufgabe der Erfindung, einen bürstenlosen Außenläufer-Motor anzugeben, der einer höheren Belastbarkeit standhält und es zudem während des Betriebes gestattet, eine optimale Lastanpassung oder eine Optimierung seines elektrischen Wirkungsgrades vorzunehmen.
Diese Aufgaben der Erfindung werden in vorteilhafter Weise durch die in den Ansprüchen 13 bzw. 20 genannten Merkmale gelöst. Vorteilhafte Weiterbildungen der Erfindung sind in den Unteransprüchen dieser Ansprüche charakterisiert.
Bürstenloser Außenläufer-Gleichstrom-Generatoren nach dem Stand der Technik können aus der vorgenannten Patentschrift abgeleitet werden, da ein Gleichstrom-Motor grundsätzlich wie ein Generator betrieben werden kann.
Nachteilig wirkt sich hierbei wiederum die in den Spulenwicklungen entwickelte Wärme aus. Es ist deshalb Aufgabe der Erfindung, einen bürstenlosen Außenläufer-Gleichstrom-Generatoren anzugeben, der einer höheren Wärmeentwicklung standhält und es zudem während des Betriebes gestattet, eine Spannungssteigerung oder eine Steigerung des elektrischen Wirkungsgrades vorzunehmen.
Diese Aufgaben der Erfindung werden in vorteilhafter Weise durch die in den Ansprüchen 1 bzw. 12 genannten Merkmale gelöst. Vorteilhafte Weiterbildungen der Erfindung sind in den Unteransprüchen dieser Ansprüche charakterisiert.
Ausführungsbeispiele der Erfindung sind in den Zeichnungen dargestellt und werden im folgenden näher beschrieben.
Die Ausführungsbeispiele beziehen sich zwar auf bürstenlose Außenläufer-Generatoren anwendbar. Auch wenn dies nicht jedesmal expressis verbis erwähnt wird. Mit anderen Worten: Die technischen Merkmale der in den FIG. gezeigten Generatoren sind genau so auf die erfindungsgemäßen bürstenlosen Außenläufer-Motoren bzw. Gleichstrom-Generatoren zu beziehen.

Bei dem erfindungsgemäßen Gleichstrom -Generator können während des Betriebes seiner Mehrpoligkeit entsprechende Spulenwicklungen oder Teile davon hintereinander, parallel oder kombiniert zusammengeschaltet werden . Hierdurch ergibt sich entweder eine höhere Spannung oder ein höherer elektrischer Wirkungsgrad.

Die Vorteile des erfindungsgemäßen Generators gegenüber bekannten Generatoren nach den Stand der Technik sind: Geringeres Volumen und Gewicht, ungleich höherer Wirkungsgrad und höhere Spannung bei geringer Drehzahl .

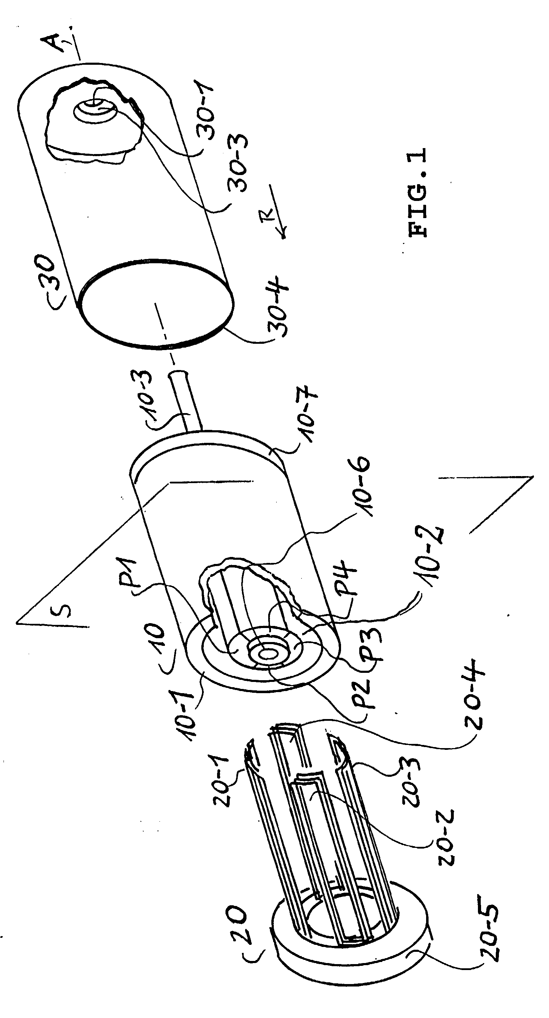

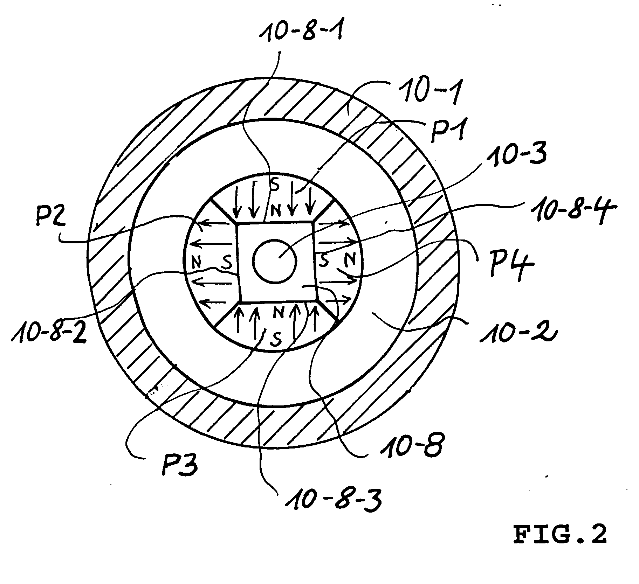

Die in den Zeichnungen dargestellten Ausführungsbeispiele werden im folgenden näher beschrieben. Es zeigen:
FIG. 1
   eine Explosionszeichnung mit perspektivisch dargestelltem 4-poligen Rotor mit Ringspalt für die Spule, mit perspektivisch dargestellter feststehender freitragender Spuleneinheit mit 4 separaten Wicklungen und mit perspektivisch dargestellten Generator(Motor)gehäuse;
FIG. 2
   eine Schnittdarstellung durch den Rotor nach FIG. 1 gemäß der Schnittebene S mit Angabe der Magnetisierungsrichtungen in den Permanentmagneten;
FIG.3
   eine Schnittdarstellung analog FIG. 2 für eine andere Ausführungsform eines Rotors mit einen Joch aus hartmagnetischem Material;
FIG.4
   eine Schnittdarstellung analog FIG. 2 für eine weitere Ausführungsform des Rotors mit einem Joch aus hartmagnetischem Material und mit außenliegendem Abschirmblech aus weichmagnetischem Material;
FIG.5
   eine Schnittdarstellung durch den Generator nach FIG. 1 im zusammengebauten Zustand gemäß einer durch die Achse A hindurchgehenden Schnittebene;
FIG.6A bis 6F
   Möglichkeiten der Zusammenschaltung der 4 Spulenwicklungen (der Spuleneinheit nach FIG.1 zur Beeinflussung der Höhe der Generatorspannung( bzw.zur Beeinflussung der Lastanpassung bei Motoren) oder des elektrischen Wirkungsgrades;
FIG.7A und FIG.7B
   Schnittdarstellungen eines 6-poligen bürstenlosen Gleichstromgenerators mit im Joch angeordneten Lüftungsachlitzen;
FIG.8
   eine Schnittdarstellung durch das Joch eines 6-poligen bürstenlosen Gleichstromgenerators mit schräg (zu einer gedachten radialen Ausrichtung) liegenden Lüftungsschlitzen;
FIG.9
   eine schematische Schnittdarstellung eines bürstenlosen Außenläufermotors nach dem Stand der Technik.

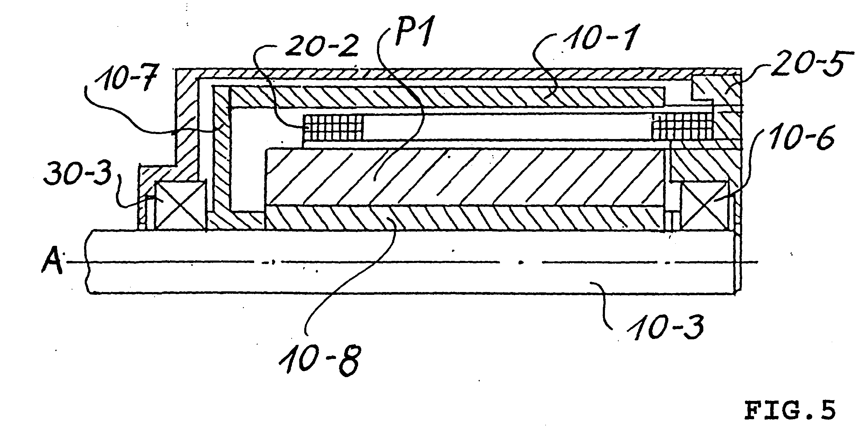

FIG. 1 zeigt eine Explosionszeichnung mit
perspektivisch dargestelltem 4-poligen Rotor 10 mit Ringspalt 10-2 zur Aufnahme der Spulenwicklungen der Spuleneinheit 20, mit perspektivisch dargestellter feststehender freitragender Spuleneinheit 20 mit 4 separaten Wicklungen 20-1, 20-2, 20-3 und 20-4 und
mit perspektivisch dargestelltem Generatorgehäuse 30.
Der Rotor 10 umfaßt die Generatorwelle 10-3 mit der gedachten Achse A, vier konzentrisch um die Generatorwelle angeordnete Permanentmagnete P1, P2, P3 und P4 (welche die Permanentmagnetanordnung P bilden) und ein konzentrisch um die Achse A angeordnetes hohlzylinderäbnliches Joch 10-1 für den magnetischen Rückfluß.
Zwischen dem Joch 10-1 und der Permanentmagnetanordnung P ist der Ringspalt 10-2 ausgebildet. An einem Ende der Permanentmagnetanordnung P ist die Generatorwelle 10-3 mit einem Kugellager 10-6 verbunden , während am anderen Ende der Permanentmagnetanordnung die Generatorwelle für Antriebszwecke herausgeführt ist. Einzelheiten zur Befestigung der Permanentmagnetanordnung P auf der Generatorwelle 10-3 und Einzelheiten zur Magnetisierung der Permanentmagnete sind in Zusammenhang mit FIG.2 beschrieben. Während das eine Ende des Joches 10-1 zur Aufnahme der Spulenwicklungen der Spuleneinheit 20 offen ist, ist das andere Ende über Scheibe 10-7 drehfest mit den hinteren Ende der Permanentmagnetanordnung P und der Generatorachse 10-3 verbunden. Einzelheiten hierzu sind in Zusammenhang mit FIG.5 beschrieben.

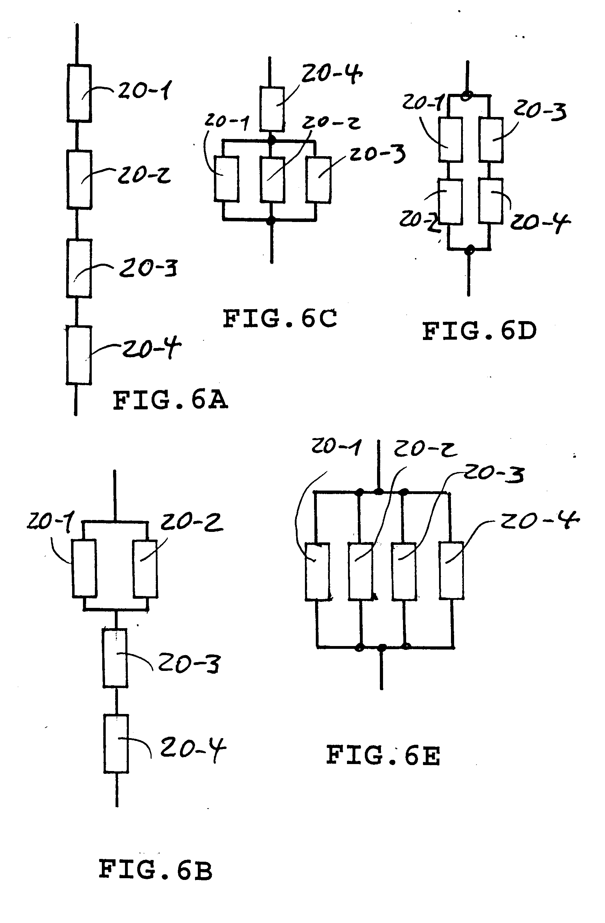

Die Spuleneinheit 20 besteht aus einer scheibenförmigen Grundplatte 20-5, vorzugsweise aus Kunststoff gefertigt, in der eine Aussparung zur Aufnahme des Kugellagers 10-6 vorgesehen ist. Auf dieser Grundplatte sind entsprechend den vier Permanentmagneten P1 bis P4 vier freitragende Spulenwicklungen 20-1, 20-2, 20-3, 20-4 konzentrisch zur Achse A angeordnet.
Diese Wicklungen können ein- oder mehrlagig ausgeführt sein.
Sie weisen eine entsprechend dem Ringspalt 10-2 angepaßte Krümmung auf. Die Enden jeder Spulenwicklung können fest miteinander verbunden sein ( z.B. für eine Hintereinanderschaltung o.a.) oder automatisch wahlweise miteinander verbunden werden. Nähere Angaben hierzu werden in Zusammenhang mit FIG.6A-6E gemacht.

Das Generatorgehäuse 30 wird wie eine hohlzylinderähnliche Kappe in Richtung R über den Rotor 10 geschoben, wobei die Generatorwelle 10-3 durch die Öffnung 30-1 und durch ein Kugellager verläuft, welches auf der Innenseite in einer Aufnahme 30-3 angeordnet ist.

Nach Einführen der Spulenwicklungen der Spuleneinheit 20 in den Ringspalt 10-2 wird der vordere Rand 30-4 des Generatorgehäuses 30 mit dem äußeren Rand der Grundplatte 20-5 der Spuleneinheit 20 verbunden (z.B. durch eine Klebverbindung).

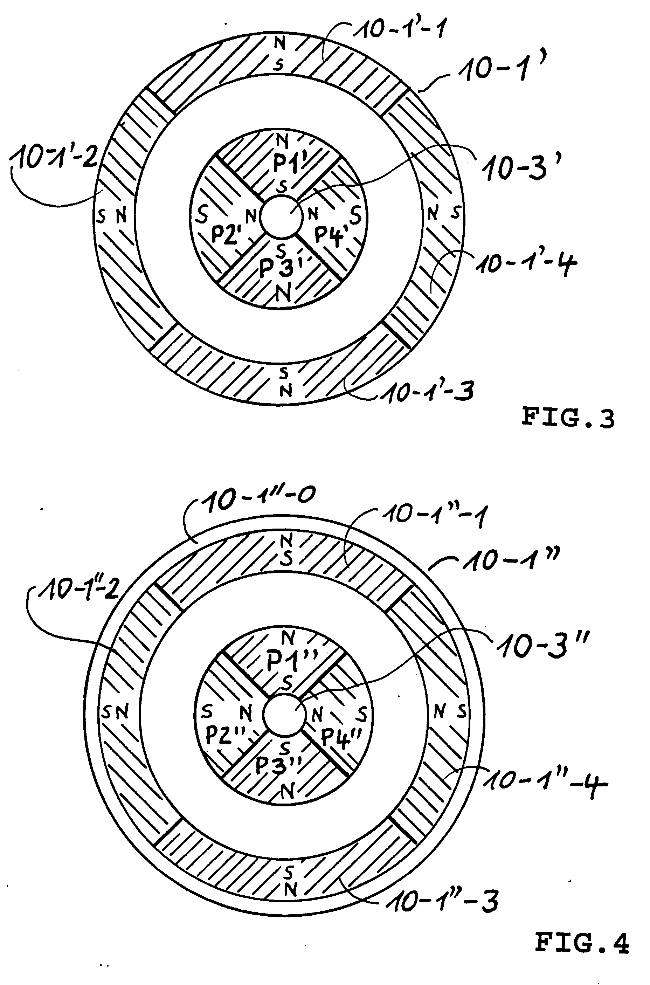

FIG. 2 zeigt eine Schnittdarstellung durch den Rotor 10 in FIG. 1 gemäß der Schnittebene S mit Angabe der Magnetisierungsrichtungen in den Permanentmagneten P1, P2, P3 und P4.
Unmittelbar auf der Generatorwelle 10-3 sitzt ein Trägerstück 10-8 mit quadratischem Querschnitt. Auf den Außenseiten 10-8-1, 10-8-2, 10-8-3 und 10-8-4 dieses Trägerstückes 10-8 sind die Permanentmagnete P1, P2, P3 und P4 angeordnet (Klebverbindung ); die Nachbarseiten der Permanentmagnete sind ebenfalls miteinander verklebt. Die Permanentmagnete sind entsprechend der mit N (für Nordpol) und S (für Südpol) gekennzeichneten Pfeile diametral magnetisiert.
Eine diametrale Magnetisierung liegt vor, wenn unabhängig von der Anzahl der Permanentmagnete in der Permanentmagnetanordnung die zuvor noch separaten Permanentmagnete (als Preßstücke) derart magnetisiert werden, daß die magnetischen Feldlinien parallel verlaufen.
Es sind jedoch auch andere Lösungen denkbar, bei denen eine radial verlaufende Magnetisierung gegeben ist, bei denen eine höhere Anzahl von Permanentmagneten gegeben ist oder bei denen das Trägerstück 10-8 entfällt.
Die Permanentmagnetanordnung kann entweder aus einzelnen Permanentmagneten zusammengesetzt sein oder aus einem enzigen Formteil magnetisierbaren Materials bestehen, welches entsprechend einer gewünschten Polzahl aufmagnetisiert wird. Analoges gilt für ein Joch aus hartmagnetischem Material, welches aus mehren Permanentmagnetsegmenten
besteht.(Einzelheiten werden im Zusammenhang mit FIG. 3 und FIG. 4 beschrieben).
Das Joch 10-1 dient dem magnetischen . Durch das gemeinsam mit der Permanentmagnetanordnung P umlaufende
Joch 10-1 können sich in diesem keine (durch Schneiden von Feldlinien bedingten ) energieverzehrenden Wirbeiströme ausbilden, die den elektrischen Wirkungsgrad des Generators herabsetzen würden.

Ohne Kühlungsmaßnabmen würde sich im Ringspalt durch die Ohmschen Verluste (Wärmeverluste in den Wicklungen) ein Wärmestau ergeben, der zu einer geringen elektrischen Belastbarkeit des Generators führt.

Bei einer großen Wärmeentwicklung ist die Wicklung oder der Magnetismus durch Überschreitung des Curie-Punktes gefährdet.

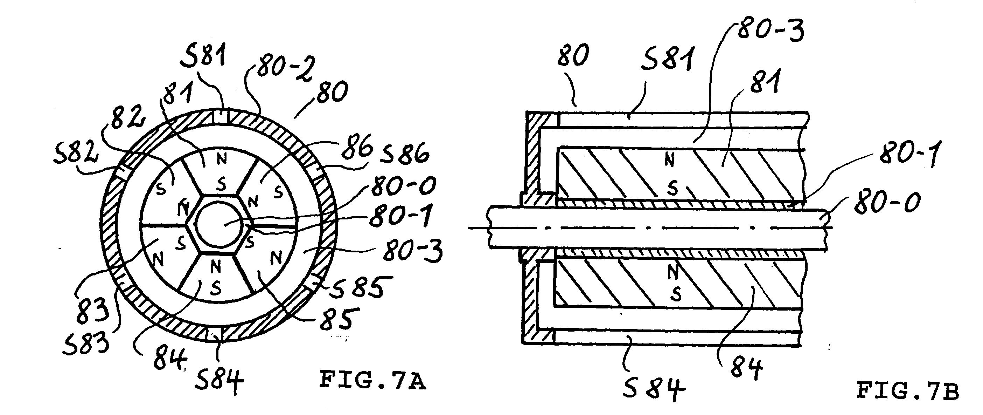

Aus diesem Grunde wird gemäß des Ausführungsbeispieles nach FIG. 7 das Joch 80-2 mit Kühlschlitzen S81, S82, S83, S84, S85 und S86 versehen.
Während des Generatorlaufs tritt durch die Kühlschlitze Luft in den Ringspalt 80-3 ein, sie nimmt dort entstandene Wärme auf, welche mit der erwärmten Kühlluft wieder nach außen abgeführt wird.
Die Kühlschlitze entfalten eine optimale Kühlwirkung, wenn sie in axialer Ausrichtung nahezu mittig über den Permanentmagneten angeordnet sind und nur eine geringe Abweichung von wenigen Grad gegenüber einem parallelen Verlauf zur Generatorachse aufweisen.
Ansonsten können die Kühlschlitze an beliebigen Stellen angeordnet sein. Neben Kühlschlitzen können auch andere Aussparungen für einen Luftdurchtritt, z.B. Lochbohrungen u.a.m. vorgesehen sein. Eine Erhöhung der Kühlwirkung wird erreicht, wenn auch Öffnungen für einen Luftdurchtritt im Rotorträger bzw. der Scheibe 10-7 (FIG.1) vorgesehen sind. Der Eintritt der Kühlluft in das Generatorgehäuse bzw. der Austritt der erwärmten Kühlluft wird erleichtert, wenn die Aussparungen entsprechend schräg im Joch angeordnet sind. Weitere Hinweise zur Kühlung folgen an späterer Stelle.

Untersuchungen haben bestätigt, daß beim Betrieb bürstenloser Wechselstrom-Generatoren jedweder Art und Konstruktion für einen Bereich niederer Umlaufgeschwindigkeit die erzeugte Spannung durch Hintereinanderschaltung aller Spulenwicklungen oder eines Teiles davon erhöht werden kann und daß für einen Bereich höherer Umlaufgeschwindigkeit der elektrische Wirkungsgrad durch Parallelschaltung aller Spulenwicklungen oder eines Teiles davon erhöht werden kann. Als Umschaltparameter kann z.B. eine vorgegebene Drehzahl oder ein vorgegebener Wert der elektronischen Kommutierung verwendet werden.
Die FIG.6 A bis F zeigen verschiedene Möglichkeiten der Zusammenschaltung aller vorhandenen 4 Spulenwicklungen 20-1, 20-2, 20-3 und 20-4 gemäß FIG. 1.
Eine Hintereinanderschaltung führt immer zu einer Spannungserhöhung im Vergleich zu einer Parallelschaltung aller Spulenwicklungen. (Bei Motoren ist durch Hintereinanderschaltung eine bessere Lastanpassung möglich).

Eine Parallelschaltung führt immer zu einer Erhöhung des elektrischen Wirkungsgrades im Vergleich zu einer Hintereinanderschaltung aller Spulenwicklungen . Dies gilt sowohl für Generatoren als auch für Motoren.

In FIG. 6 A ist eine einfache Hintereinanderschaltung der Spulenwicklungen 20-1, 20-2, 20-3 und 20-4 gezeigt; hierbei ist die erzeugte Gleichspannung am höchsten.

In FIG. 6 B sind die Spulenwicklung 20-1 und20-2 in Parallelschaltung mit den Spulen 20-3 und 20-4 hintereinandergeschaltet.

In FIG. 6 C sind die Spulenwicklungen 20-1 und 20-2, 20-3 in Parallelschaltung mit der Spulenwicklung 20-4 hintereinandergeschaltet.

In FIG. 6D sind die hintereinandergeschalteten Spulenwicklungszweige 20-1 und 20-2 sowie 20-3 und 20-4 parallelgeschaltet.

In FIG. 6 E sind alle vier Spulenwicklungen 20-1, 20-2, 20-3 und 20-4 parallelgeschaltet.

Für die gezeigten Schaltungsanordnungen ist
a) die Spannungshöhe im Falle FIG. 6 A am höchsten; sie sinkt in der Folge FIG.6B, Fig.6C, FIG.6D bis FIG.6E weiter ab ,
b) der elektrische Wirkungsgrad im Falle FIG. 6E am höchsten; er sinkt in der Folge FIG.6D, FIG.6 C, FIG.6B bis FIG.6A weiter ab.

Es sei betont, daß auch Teile von Spulenwicklungen zur Beeinflussung der Spannungshöhe oder des Wirkungsgrades in beliebiger Kombination parallel und/oder hintereinander geschaltet werden können.

Eine automatische Umschaltung von der einen zur anderen Zusammenschaltungsmöglichkeit der vier Spulenwicklungen kann z.B. dadurch erfolgen, daß bei einer bestimmten Drehzahl oder einem bestimmten Kommutierungswert eine automatische Umschaltung erfolgt. Der Stand der Technik bietet hierzu vielfältige Möglichkeiten. Die für die Schaltung zur Umschaltung erforderliche elektrische Energie wird von der erzeugten Generatorspannung abgeleitet bzw. über die elektronische Kommutierung zur Verfügung gestellt.

FIG.3
zeigt eine Schnittdarstellung analog FIG. 2 für eine andere Ausführungsform des Rotors mit einem Joch aus hartmagnetischem Material.
Bei dieser Ausführungsform besteht die Permanentmagnetanordnung P' aus vier Permanentmagneten P1', P2', P3' und P4', welche konzentrisch auf der Generatorwelle 10-3' angeordnet sind. Das Joch besteht aus vier konzentrisch angeordneten Permanentmagnetsegmenten 10-1'-1, 10-1'-2, 10-1'-3 und 10-1'-4. Die Magnetisierung der Permanentmagnete P1' , P2', P3' und P4' und der Permanentmagnetsegmente 10-1'-1, 10-1'-2, 10-1'-3 und 10-1'-4 ist durch Angabe des Nord(N)- und Süd(S)-poles gekennzeichnet. Die Magnetisierung kann diametral oder auch radial vorgenommen werden. Als permanentmagnetisches Material kommt vorzugsweise Magnetoplast-Material (z.B. Hartferrit) in Betracht, das sich kostengünstig herstellen, formen und magnetisieren läßt.
Der Vorteil dieser Ausführungsform, bei der sowohl die Permanentmagnetanordnung als auch das Joch aus hartmagnetischem Material besteht liegt in einer höheren magnetischen Luftspaltenergie und geringen Herstellungskosten (Joch und Permanentmagnetanordnung werden in einem einzigen Schritt z.B. durch Spritzguß hergestellt).

FIG.4 zeigt eine Schnittdarstellung analog FIG. 2 für eine weitere Ausführungsform eines Rotors 10-1'' mit einem Joch aus hartmagnetischem Material und mit außenliegendem Abschirmblech 10-1''-0 aus weichmagnetischem Material.
Dieses Abschirmblech dient dem Magnetrückfluß . Es erhöht den elektrischen Wirkungsgrad des Generators und verhindert einen gegebenenfalls unerwünschten Magnetflußsmog außerhalb des Generators. Die auf der Generatorwelle angeordneten Permanentmagnete sind mit P1'', P2'', P3'' und P4''bezeichnet, die auf sie radial ausgerichteten Permanentmagnetsegmente des Joches mit 10-1''-1, 10-1''-2, 10-1''-3 und 10-1''-4.
Für den Fall, daß das Joch mit Kühlschlitzen versehen werden soll, wird das Abschirmblech sektionsweise zwischen den Kühlschlitzen auf die Permanentmagnetsegmente aufgebracht (z.B. durch Kleben).

Die FIG.7A und FIG.7B
zeigen Schnittdarstellungen eines erfindungsgemäßen 6-poligen Rotors eines bürstenlosen Gleichstromgenerators mit im Joch 80 angeordneten Lüftungsschlitzen S81, S82, S83, S84, S85 und S86 zur Kühlung.
FIG. 7A ist eine Schnittdarstellung gemäß einer senkrecht durch die Generatorachse 80-0 verlaufenden Schnittebene; für die schnittdarstellung in FIG. 7B verläuft die Schnittebene durch die Achse der Generatorwelle.
Die Permanentmagnetanordnung besteht aus sechs konzentrisch um die Generatorwelle 80-1 angeordneten Permanentmagneten 81, 82, 83, 84, 85 und 86, welche auf dem auf der Generatorwelle sitzenden Trägerstück 80-1 angeordnet sind . Der zwischen der Permanentmagnetanordnung und dem Joch 80-2 ausgebildete Ringspalt ist mit 80-3 bezeichnet. Das Joch weist Lüftungsschlitze S81, S82, S83, S84, S-85 und S-86 zur Kühlung auf, die jeweils nahezu mittig axial auf die ihnen zugeordneten Permanentmagnete 81, 82, 83, 84, 85 und 86 ausgerichtet sind.
Eine exakte mittige Ausrichtung ist für den Eisenrückschluß optimal, während eine nur wenige Grad von der Parallelität zur Generatorachse abweichende Ausrichtung für die Luftkühlung optimal ist.

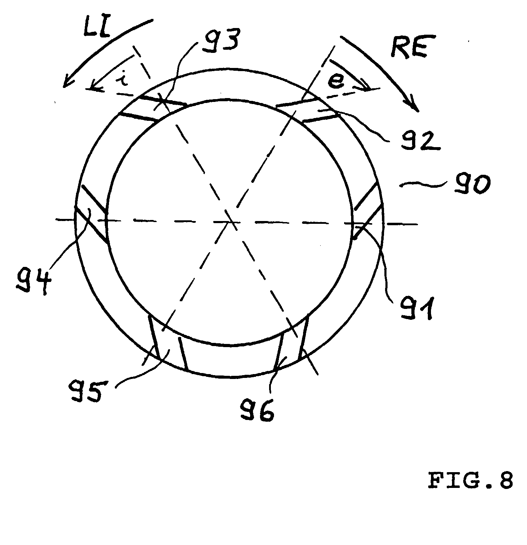

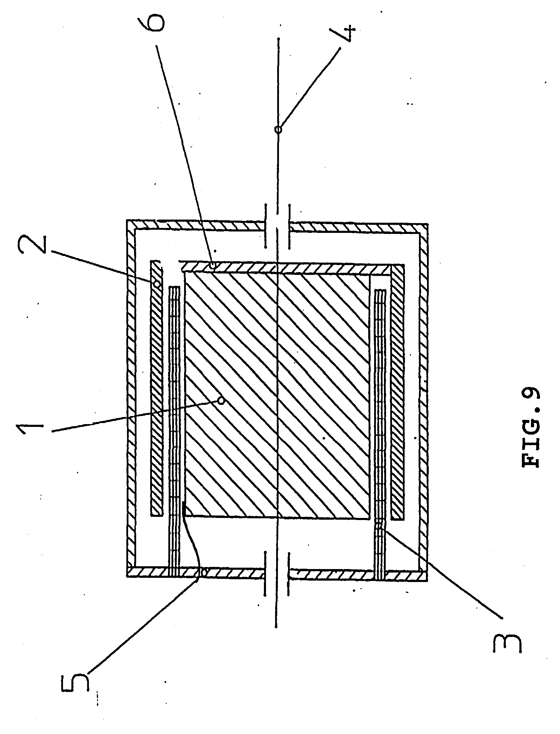

FIG.8 zeigt
eine Schnittdarstellung durch das Joch 90 eines 6-poligen bürstenlosen Gleichstromgenerators mit schräg zu einer gedachten radialen Ausrichtung liegenden Lüftungsschlitzen 91, 92, 93, 94 95 und 96 zur Kühlung.
Für einen Rechtslauf des Generators wird der Eintritt des Luftstromes entgegen der Laufrichtung RE in den Lüftungsschlitz 92, 94, und 96 durch dessen schräge Ausgestaltung entsprechend dem Winkel e gefördert; eine analoge Betrachtung ergibt für einen Linkslauf des Generators in Richtung LI einen Abschrägungswinkel i für den Lüftungsschlitz 93, 95 und 91. Die durch einen Lüftungsschlitz in den Ringspalt eingetretene Kühlluft nimmt die dort enstandene Wärme auf; die erwärmte Kühlluft wird durch einen oder mehrere Kühlschlitze nach außen abgeführt.Vorzugsweise bildet sich der in den Ringepalt ein- und austretende Luftstrom jeweils zwischen zwei benachbarten Kühlschlitzen aus.

Sollte für die Anordnung gemäß FIG. 1 das Joch mit Kühlschlitzen ausgebildet werden, so müßte das Generatorgehäuse 30 ebenfalls mit entsprechenden Kühlschlitzen versehen werden.

Das Generator-Gehäuse 30 kann jedoch entfallen, wenn dafür das Joch mit Kühlschlitzen samt Spuleneinheit in einem größeren vom Joch ausreichend beabstandeten Gehäuse untergebracht wird.

Eine Kühlung kann auch über eine Generator(Motor)-Hohlwelle erfolgen, von der zum Ringspalt hin offene Lüftungsbohrungen durch das Trägerstück (falls vorhanden) und durch die auf der Welle sitzende Permanentmagnetanordnung führen. Bei dieser Lösung wird der Ein- bzw. Austritt der Luft in die / aus der Generator/Motor-Hohlwelle durch auf dieser Welle angeordnete Ventilatoren unterstützt.

## Patentansprüche

1. Bürstenloser Gleichstrom-Außenläufer-Generator mit
einem Rotor und einer Spuleneinheit,
dadurch gekennzeichnet,
daß der Rotor aus einer zylindrisch oder hohlzylinderähnlich angeordneten Permanentmagnetanordnung (P1, P2, P3, P4) und einem koaxial zu ihr angeordneten hohlzylinderähnlich ausgebildeten Joch (10-1) aus weich- oder hartmagnetischem Material besteht und
daß der Rotor drehfest mit Generatorwelle (10-3) verbunden ist,
daß die Permanentmagnetanordnung und das Joch (10-1) an einem Ende über eine Rotor-Stirnplatte (10-7) miteinander verbunden sind,
daß zwischen der Permanentmagnetanordnung und dem Joch ein Ringspalt (10-2) gebildet ist,
in den eine eisenlose freitragende Spuleneinheit (20) eintaucht,
daß die Permanentmagnetanordnung 2 mal n Außenpole aufweist oder aus 2 mal n Permanentmagneten (n= 1,2,3,4,...) besteht, welche in einer gedachten
Schnittebene senkrecht zur Generatorwellenachse kreisringsegmentförmig benachbart angeordnet sind,
daß die Spuleneinheit (20) aus einer der Anzahl der Permanentmagnete entsprechenden Anzahl von Spulenwicklungen( 20-1, 20-2, 20-3, 20-4) besteht,
und daß die Permanentmagnetanordnung unmittelbar oder mittelbar (über ein Trägerstück -10-8-) auf der Generatorwelle (10-3) angeordnet ist.

2. Anordnung nach Anspruch 1,
dadurch gekennzeichnet, daß die Rotor-Stirnplatte (10-7) scheibenförmig ausgebildet ist.

3. Anordnung nach Anspruch 1,
dadurch gekennzeichnet, daß die benachbarten Permanentmagnete (P1, P2, P3, P4) der Permanentmagnetanordnung miteinander verklebt sind.

4. Anordnung nach Anspruch 1 oder 3,
dadurch gekennzeichnet, daß die Permanentmagnete der Permanentmagnetanordnung radial oder diametral magnetisiert sind.

5. Anordnung nach einem der Ansprüche 1 bis 2,
dadurch gekennzeichnet,
daß das Joch (80-2) und/ oder die Rotor-Stirnplatte (10-7) Aussparungen (S81, S82, S83, S84, S85 und S86) zur Wärmeableitung aufweisen.

6. Anordnung nach Anspruch 5 ,
dadurch gekennzeichnet, daß die Aussparungen (S81, S82, S83, S84, S85 und S86) in dem Joch (80-2) nahezu parallel zur Generatorachse (80-0) verlaufende Schlitze sind, deren gegenseitiger Abstand der Polteilung der Permanentmagnete (81, 82, 83, 84, 85 und 86) entspricht, wobei jeder Schlitz in radialer Ausrichtung mittig bis nahezu mittig auf dem ihm zugeordneten Permanentmagneten ausgerichtet ist.

7. Anordnung nach Anspruch 6 ,
dadurch gekennzeichnet, daß die Schlitze (91, 92, 93, 94, 95, 96) schräg (a,e) zur gedachten radialen Ausrichtung verlaufen.

8. Anordnung nach Anspruch 1,
dadurch gekennzeichnet, daß
das Joch aus hartmagnetischem Material besteht und derart magnetisiert ist, daß den Magnetpolen der Permanentmagnetanordnung (P1', P2', P3', P4') entgegengesetzte Magnetpole des Joches (10-1'-1, 10-1'-2, 10-1'-3 10-1'-4) gegenüberstehen.

9. Anordnung nach Anspruch 1 und 8,
dadurch gekennzeichnet, daß
die Permanentmagnetanordnung (P1', P2', P3', P4') und das Joch (10-1'-1, 10-1'-2, 10-1'-3 10-1'-4) aus dem gleichen Magnetmaterial bestehen.

10. Anordnung nach Anspruch 1 oder Anspruch 9,
dadurch gekennzeichnet, daß
das Magnetmaterial Magnetoplast (z.B. Hartferrit) ist.

11. Anordnung nach einem der Ansprüche 1 bis 10,
dadurch gekennzeichnet,
daß die Generator-Welle als Hohlwelle ausgebildet ist und mit zum Ringspalt hin offenen durch das Trägerstück (falls vorhanden) und durch die auf der Welle sitzende Permanentmagnetanordnung führenden Lüftungsbohrungen verbunden ist und
daß für den Ein- bzw. Austritt der Luft in die / aus der Generator-Hohlwelle auf dieser Ventilatoren angeordnet sind.

12. Verfahren zum Betrieb eines bürstenlosen Gleichstrom-Außenläufer-Generators mit einem mehrpoligen Rotor und einer Spuleneinheit mit einer der Polanzahl entsprechenden Anzahl von Wicklungen,
dadurch gekennzeichnet,
daß während des Generator-Betriebes in Abhängigkeit der Drehzahl oder der elektronischen Kommutierung Spulenwicklungen (20-1, 20-2, 20-3, 20-4) oder Teile davon in beliebiger Kombination (FIG. 6A bis E) hintereinander oder parallel geschaltet werden .

13. Bürstenloser Außenläufer-Motor mit einem Rotor und einer Spuleneinheit,
bei dem der Rotor aus einer zylindrisch oder hohlzylinderähnlich angeordneten Permanentmagnetanordnung (P1, P2, P3, P4) und einem koaxial zu ihr angeordneten hohlzylinderähnlich ausgebildeten Joch (10-1) besteht und bei dem der Rotor drehfest mit Motorwelle (10-3) verbunden ist,
bei dem die Permanentmagnetanordnung und das Joch (10-1) an einem Ende über eine Rotor-Stirnplatte (10-7) miteinander verbunden sind,
bei dem zwischen der Permanentmagnetanordnung und dem Joch ein Ringspalt (10-2) gebildet ist, in den eine eisenlose freitragende Spuleneinheit (20) eintaucht,
bei dem die Permanentmagnetanordnung mindestens 2 Außenpole aufweist,
bei dem die Spuleneinheit (20) aus einer der Anzahl der Außenpole entsprechenden Anzahl von Spulenwicklungen( 20-1, 20-2, 20-3, 20-4) besteht,
und daß die Permanentmagnetanordnung auf der Motorwelle (10-3) angeordnet ist, dadurch gekennzeichnet,
daß das Joch (80-2) und/ oder die Rotor-Stirnplatte (10-7) Aussparungen (S81, S82, S83, S84, S85 und S86) zur Wärmeableitung aufweisen.

14. Anordnung nach Anspruch 13 ,
dadurch gekennzeichnet, daß die Aussparungen (S81, S82, S83, S84, S85 und S86) in dem Joch (80-2) nahezu parallel zur Motorachse (80-0) verlaufende Schlitze sind, deren gegenseitiger Abstand der Polteilung der Permanentmagnete (81, 82, 83, 84, 85 und 86) entspricht, wobei jeder Schlitz in radialer Ausrichtung mittig bis nahezu mittig auf dem ihm zugeordneten Permanentmagneten ausgerichtet ist.

15. Anordnung nach Anspruch 14 ,
dadurch gekennzeichnet, daß die Schlitze (91, 92, 93, 94, 95, 96) schräg (a,e) zur gedachten radialen Ausrichtung verlaufen.

16. Anordnung nach Anspruch 13,
dadurch gekennzeichnet, daß
das Joch aus hartmagnetischem Material besteht und derart magnetisiert ist, daß den Magnetpolen der Permanentmagnetanordnung (P1', P2', P3', P4') entgegengesetzte Magnetpole des Joches (10-1'-1, 10-1'-2, 10-1'-3 10-1'-4) gegenüberstehen.

17. Anordnung nach Anspruch 13 und 16,
dadurch gekennzeichnet, daß
die Permanentmagnetanordnung (P1', P2', P3', P4') und das Joch (10-1'-1, 10-1'-2, 10-1'-3 10-1'-4) aus dem gleichen Magnetmaterial bestehen.

18. Anordnung nach einem der Ansprüche 13 bis 17,
dadurch gekennzeichnet, daß
das Magnetmaterial Magnetoplast (z.B. Hartferrit) ist.

19. Anordnung nach einem der Ansprüche 13 bis 18,
dadurch gekennzeichnet,
daß die Motor-Welle als Hohlwelle ausgebildet ist und mit zum Ringspalt hin offenen durch ein Trägerstück (falls vorhanden) und durch die auf der Welle sitzende Permanentmagnetanordnung führenden Lüftungsbohrungen verbunden ist und
daß für den Ein- bzw. Austritt der Luft in die / aus der Motor-Hohlwelle auf dieser Ventilatoren angeordnet sind.

20. Verfahren zum Betrieb eines bürstenlosen Außenläufer-Motors mit einem mehrpoligen Rotor und einer Spuleneinheit mit einer der Polanzahl entsprechenden Anzahl von Wicklungen,
dadurch gekennzeichnet,
daß während des Motor-Betriebes in Abhängigkeit der Drehzahl oder der elektronischen Kommutierung Spulenwicklungen (20-1, 20-2, 20-3, 20-4) oder Teile davon in beliebiger Kombination (FIG. 6A bis E) hintereinander oder parallel geschaltet werden .
